# EUROPEAN PATENT APPLICATION

(11) **EP 4 834 082 A1**
(43) Date of publication of application: **04.11.2026**
(21) Application number: 26175006.1
(22) Date of filing: 28.04.2026
(51) Int. Cl.: A01D 34/00

(54) **ROBOT LAWNMOWER**

(30) Priority: 29.04.2025 IT 202500009510
(71) Applicant: Stiga S.p.A., 31033 Castelfranco Veneto (TV) (IT)
(72) Inventor: FOSCARO, Carlo, I-31050 Casacorba di Vedelago (TV) (IT); CECCHETTO, Mauro, I-35018 San Martino di Lupari (PD) (IT); SCAPIN, Michele, I-36061 Bassano del Grappa (VI) (IT)
(74) Representative: PGA S.p.A.

(57) **Abstract**

The present disclosure relates to a robot lawnmower for grounds maintenance comprising a plurality of wheels (2), one or more cutting tools (3) and a blade guard (4) located above the cutting tools. The blade guard comprises a top cover (5) delimiting superiorly a cutting area (11) of the cutting tools, a front grille (6) positioned forwardly with respect to the top cover, and mutually opposing flanks (7, 7') projecting laterally from the top cover, wherein each flank extends transversely to the same top cover. Each flank comprises a respective front section (10) having a lower edge (10a) which, proceeding towards the front grille, progressively approaches the top cover.

## Description

### FIELD OF THE INVENTION

The present invention relates to a robot lawnmower for grounds maintenance provided with a blade guard. For example, the invention may find advantageous application in the field of maintenance of green areas and in particular for the manufacture of robot lawnmowers intended for the care of gardens and grass surfaces in domestic or professional settings.

### BACKGROUND ART

In the field of automated maintenance of green areas, autonomous robot lawnmowers provided with cutting blades for the maintenance of grass surfaces are known. Such robot lawnmowers are generally provided with a blade guard, which comprises a front grille having a toothed profile designed to prevent accidental access to the cutting blades by the user or by foreign objects.

Although these solutions contribute to improving the overall safety of the robot lawnmower, the Applicant has found that they have certain limitations. In particular, the mere presence of a front grille may hinder the natural entry of grass into the cutting area, causing bending or compression of the grass blades during the forward movement of the robot. This effect compromises the cutting quality, making it less uniform, especially in the presence of tall grass or grass oriented in irregular directions. Therefore, although the solutions described above effectively protect the user and allow partial channeling of the grass towards the blades, the Applicant has observed that they exhibit certain drawbacks and may be improved in certain respects.

### OBJECT OF THE INVENTION

The object of the present invention is therefore to solve at least one of the drawbacks and/or limitations of the prior solutions.

A first object of the present invention is to provide a robot lawnmower capable of reducing bending and compression of the grass during forward movement, improving the uniformity of the cut.

It is also an object of the present invention to provide a robot lawnmower that allows more effective management of the grass flow towards the cutting area of the cutting tools.

It is further an object of the present invention to provide a robot lawnmower capable of maintaining high safety standards, limiting accidental access to the cutting blades.

A further objective is to provide a robot lawnmower having a blade guard that does not interfere with the motion of the front wheels and allows correct forward movement of the robot even in the presence of tall or non-uniform grass.

These objects and others, which will become more apparent from the following description, are substantially achieved by a robot lawnmower in accordance with one or more of the appended claims and/or the following aspects.

### SUMMARY

Aspects of the invention are described below.

In a 1st aspect, a blade guard (4) for a land maintenance apparatus, for example a robot lawnmower or a ride-on lawnmower, is provided, comprising:
- a top cover (5) delimiting superiorly a cutting area (11) of said one or more cutting tools (3),
- a front grille (6) positioned forwardly with respect to the top cover (5),
- flanks (7, 7') opposite to each other and emerging laterally from the top cover (5), each of said flanks extending transversely to the same top cover (5).

In a 2nd aspect according to the preceding aspect, each flank (7, 7') comprises a respective front section (10) having a lower edge (10a) which, proceeding towards the front grille (6), progressively approaches the top cover (5).

In aspect 2bis according to the preceding aspect, the lower edge (10a) of the front section (10) extends along a path such that, towards the front grille (6), a distance, optionally a minimum distance, between the lower edge (10a) and the top cover (5) decreases.

In a 3rd aspect according to the preceding aspect, said lower edge (10a) of the front section (10) has an arcuate profile.

In a 4th aspect according to any one of the two preceding aspects, the lower edge (10a) of the front section (10) has concavity facing downwards, to allow the passage of grass blades without compression during the forward movement of the robot lawnmower.

In a 5th aspect according to any one of the three preceding aspects, each lower edge (10a) of the respective front section (10) follows a curvilinear trajectory.

In a 6th aspect according to any one of the four preceding aspects, the curvilinear trajectory of each lower edge (10a), proceeding towards the front grille (6), progressively approaches a connection portion (14) joining each flank (7, 7') to the top cover (5).

In a 7th aspect according to any one of the five preceding aspects, each lower edge (10a) has a minimum distance from said connection portion (14) at an intermediate zone of the front section.

In aspect 7bis according to any one of the six preceding aspects, each lower edge (10a) of a respective front section (10) is in proximity to the front grille (6).

In an 8th aspect according to any one of the preceding aspects, the top cover (5) comprises:
- a central area (5a),
- a peripheral area (5b) emerging forwardly from the central area (5a) in the direction of the front grille (6) to define a tapered portion of the blade guard (4).

In a 9th aspect according to the preceding aspect, each front section (10) belonging to a respective flank (7, 7') flanks the peripheral area (5b).

In aspect 9bis according to any one of the two preceding aspects, the peripheral area (5b) extends as a continuation of the central area (5a), lying on a same surface on which the central area (5a) lies.

In aspect 9ter according to any one of the three preceding aspects, the peripheral area (5b) is coplanar with the central area (5a).

In aspect 9quater according to any one of the four preceding aspects in combination with any one of the preceding aspects from the 2nd to the 7bis, each lower edge (10a) of a respective front section (10) is at the peripheral area (5b) of the top cover (5).

In a 10th aspect according to any one of the preceding aspects, each front section (10) belonging to a respective flank (7, 7') is in proximity to opposite ends of the front grille (6).

In an 11th aspect according to any one of the preceding aspects from the 2nd to the 10th, each front section (10) of the respective flank (7, 7') has a curved outer surface with a concavity oriented in an outward direction with respect to the top cover (5).

In a 12th aspect according to any one of the preceding aspects from the 2nd to the 11th, each flank (7, 7') comprises a respective rear section (12) having a curved inner surface.

In a 13th aspect according to the preceding aspect, the inner surface of each rear section (12) has a concavity oriented towards the top cover (5).

In a 14th aspect according to any one of the two preceding aspects, each rear section (12) adjoins a front section (10) of the same flank (7, 7').

In a 15th aspect according to any one of the preceding aspects, the blade guard (4) comprises a rear opening (9) located on the opposite side of the front grille (6) with respect to the top cover (5).

In a 16th aspect according to the preceding aspect when dependent on any one of the preceding aspects from the 12th to the 14th, each rear section (12), on the side opposite to the end adjoining a front section (10), terminates at the rear opening (9), defining a lateral profile of said rear opening.

In a 17th aspect according to any one of the preceding aspects, the front grille (6) has a width extension smaller than a maximum distance between the flanks (7, 7').

In an 18th aspect according to the preceding aspect, a ratio between the width extension of the front grille (6) and the maximum distance between the flanks (7, 7') is between 0.2 and 0.45.

In a 19th aspect according to the preceding aspect, the blade guard (4) is symmetrical with respect to a vertical plane that divides the blade guard longitudinally.

In a 20th aspect according to any one of the preceding aspects, the front grille comprises a plurality of protrusions (8) extending transversely to the top cover (5) to define a toothed profile.

In a 21st aspect, a lands maintenance apparatus comprising a blade guard (4) according to any one of the preceding aspects is provided.

In a 22nd aspect according to the preceding aspect, the apparatus comprises:
- movement means (2) for allowing movement of the robot lawnmower on said lands,
- one or more cutting tools (3) for performing maintenance operations on said lands.

In a 23rd aspect according to the preceding aspect, the movement means (2) comprise a plurality of wheels and/or tracks.

In a 24th aspect according to any one of the two preceding aspects, said one or more cutting tools (3) are located below the blade guard (4).

In a 25th aspect according to any one of the three preceding aspects, each flank (7, 7') of the blade guard (4) is located at a minimum vertical height (H1) with respect to a support plane (15) defined as the plane on which the movement means (2) rest, which is lower than a maximum vertical height (H2) between the lower edge (10a) of the front section (10) of the blade guard (4) and the same support plane (15).

In a 26th aspect according to the preceding aspect, a ratio between the maximum vertical height (H2) of the lower edge (10a) and the minimum vertical height (H1) of each flank (7, 7') is between 1 and 2. In a 27th aspect according to any one of the two preceding aspects, the minimum vertical height (H1) of each flank is greater than 8 cm, optionally greater than 10 cm.

In a 28th aspect according to any one of the preceding aspects from the 21st to the 27th, the apparatus comprises a frame (13) to which the blade guard (4) is fixed.

In a 29th aspect according to the preceding aspect, the blade guard (4) is disposed between the frame (13) and said one or more cutting tools (3).

In a 30th aspect according to any one of the preceding aspects from the 23rd to the 29th, the plurality of wheels (2) comprises two front wheels (2a) arranged forwardly with respect to two rear wheels (2b), relative to a longitudinal development direction (A) of the apparatus.

In a 31st aspect according to the preceding aspect, each lower edge (10a) of a respective flank (7, 7') of the blade guard (4) is positioned rearwardly with respect to a respective one of said front wheels (2a).

In a 32nd aspect according to any one of the two preceding aspects, each lower edge (10a) is aligned with a respective one of said front wheels (2a) along a direction parallel to the longitudinal development direction (A) of the apparatus.

In a 33rd aspect according to any one of the preceding aspects from the 21st to the 32nd, the apparatus comprises a robot lawnmower or a ride-on lawnmower.

### BRIEF DESCRIPTION OF THE DRAWINGS

Some embodiments and some aspects of the invention will be described hereinafter with reference to the appended drawings, provided for illustrative purposes only and therefore not limiting, in which:
- Figure 1 is a front view of the robot lawnmower in accordance with the present disclosure,
- Figure 2 is a perspective bottom view of the robot lawnmower of Figure 1,
- Figure 3 is a side view of the robot lawnmower of Figure 1,
- Figure 4 is a perspective view of a blade guard of the robot lawnmower in accordance with the present disclosure,
- Figure 5 is a perspective bottom view of the blade guard of Figure 4,
- Figure 6 is a front view of the blade guard of Figure 4,
- Figure 7 is a side view of the blade guard of Figure 4.

### DEFINITIONS AND CONVENTIONS

It should be noted that in the present detailed description, corresponding parts illustrated in the various figures are indicated with the same reference numerals. The figures may illustrate the subject matter of the invention by means of non-scale representations; therefore, parts and components illustrated in the figures relating to the subject matter of the invention may relate exclusively to schematic representations.

### CONTROL UNIT

The robot lawnmower described and claimed herein comprises/uses at least one control unit responsible for controlling the operating conditions established by the robot lawnmower itself and/or for controlling the process steps.

The control unit may be a single unit or may consist of a plurality of separate control units depending on design choices and operational requirements.

By control unit is meant an electronic component, which may comprise at least one of: a digital processor (CPU), an analogue circuit, or a combination of one or more digital processors with one or more analogue circuits. The control unit may be "configured" or "programmed" to perform certain steps: this may be achieved in practice by any means that allows the control unit to be configured or programmed. For example, in the case of a control unit comprising one or more CPUs and one or more memories, one or more programs may be stored in appropriate memory banks connected to the CPU or CPUs; the program or programs contain instructions that, when executed by the CPU or CPUs, program or configure the control unit to carry out the operations described in relation to the control unit. Alternatively, if the control unit is or comprises analogue circuitry, then the circuit of the control unit may be designed to include circuitry configured, in use, to process electrical signals so as to carry out the steps relating to the control unit. Parts of the process described herein may be implemented by means of a data processing unit, or control unit, technically replaceable with one or more electronic computers conceived to execute a portion of a software or firmware program loaded onto a memory medium. Such software program may be written in any known programming language. The electronic computers, if two or more in number, may be connected to each other by means of a data connection such that their computing power is shared in any manner; the same electronic computers may thus be installed at even geographically different locations, creating, through the aforementioned data connection, a distributed computing environment. The data processing unit, or control unit, may be a general purpose processor configured to execute one or more parts of the process identified in the present disclosure through the software or firmware program, or may be an ASIC or dedicated processor or an FPGA, specifically programmed to carry out at least part of the operations of the process described herein. The memory medium may be non-transitory and may be internal or external to the processor, or control unit, or data processing unit, and may, in particular, be a memory geographically located remotely with respect to the electronic computer. The memory medium may also be physically divided into multiple portions, or in cloud form, and the software or firmware program may be stored on memory portions that are geographically distributed.

### DETAILED DESCRIPTION

The present description relates to a lawnmower apparatus 1 configured to perform green area maintenance operations within a garden, a lawn, or an agricultural land. Such apparatus is preferably an autonomously guided robot, capable of moving along a planned trajectory within a working area. However, in alternative embodiments, the lawnmower apparatus may comprise a ride-on lawnmower manually operated by a user, or other garden machinery provided with rotating cutting tools.

In the remainder of the description, as well as in the accompanying figures, reference will generally be made to a robot lawnmower provided with movement means 2 which, in one embodiment, comprise a plurality of wheels or, alternatively, tracks, driven by one or more electric motors connected to an electronic controller 50.

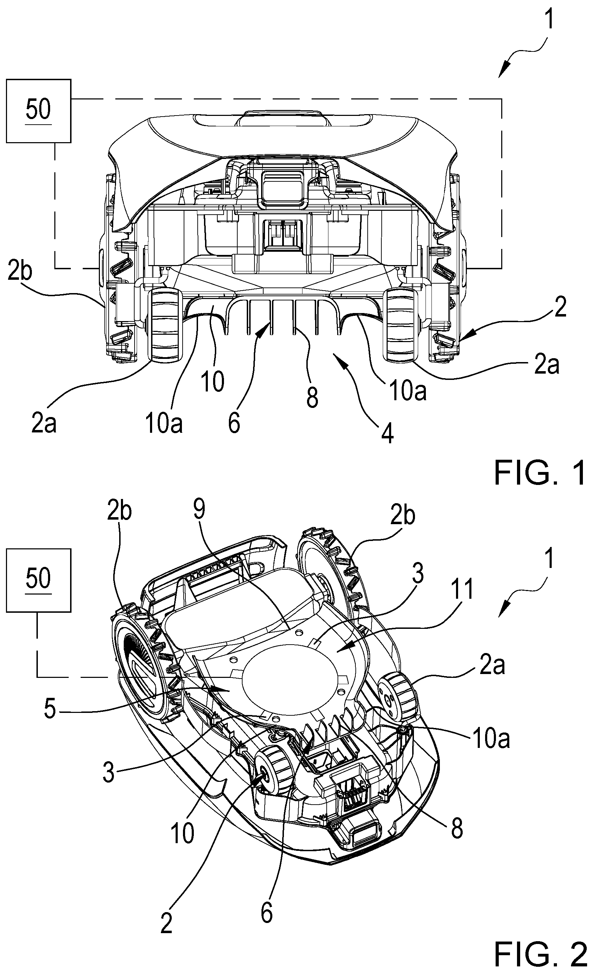

With reference to an exemplary embodiment shown in Figures 1 to 3, the robot comprises a pair of front wheels 2a and a pair of rear drive wheels 2b, driven by electric motors having a rated power between 500 W and 6000 W, and preferably between 700 W and 4500 W. The robot may further be provided with one or more sensors for autonomous navigation, such as proximity sensors or a geolocation module such as a GPS, capable of generating signals to be sent to the controller 50 to regulate the trajectory of the robot within the area to be maintained. In some embodiments, the controller 50 may be connected to a GPS device to receive information on the geographical coordinates of the robot. Furthermore, the robot may be connected to an external reference station provided with its own geolocation system, to improve positioning accuracy by means of GPS-RTK (Real-Time Kinematic) technology.

The robot lawnmower 1 comprises one or more cutting tools 3, for example rotating blades, positioned below a frame 13 of the robot. The cutting tools 3 are driven by an electric motor, which may coincide with the one used for driving the movement means 2, or may be separate. In a preferred configuration, the robot is powered by a rechargeable battery capable of supplying energy to both the movement means 2 and the cutting tool 3. The battery may have a capacity between 2 Ah and 60 Ah and an output voltage preferably between 24 V and 48 V.

To protect the cutting tool 3 and to ensure controlled channeling of the grass towards the cutting area, the robot lawnmower 1 comprises a blade guard 4, which may be attached to the frame 13 of the robot and positioned above the cutting tool 3, between the latter and the frame itself.

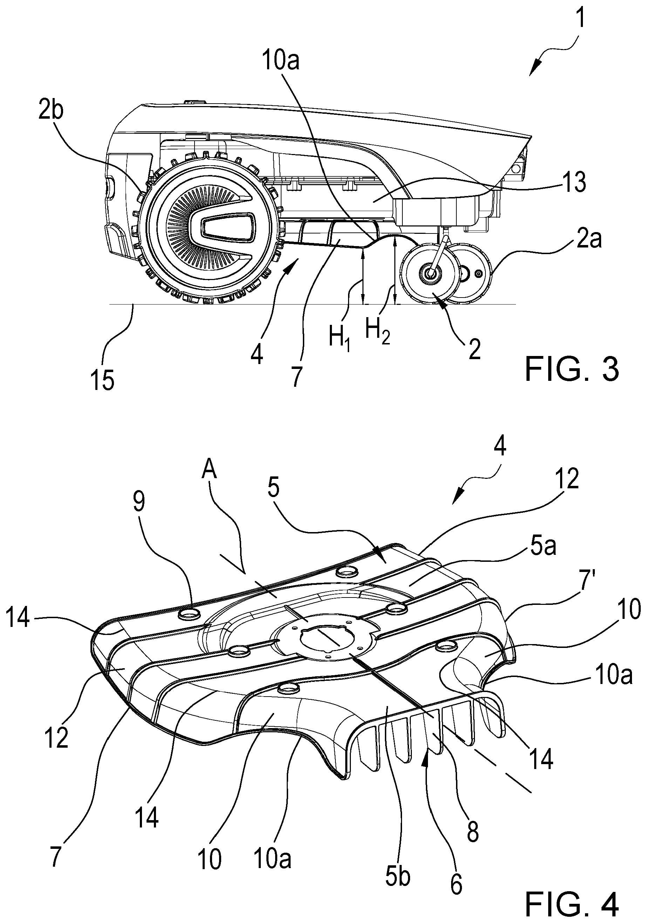

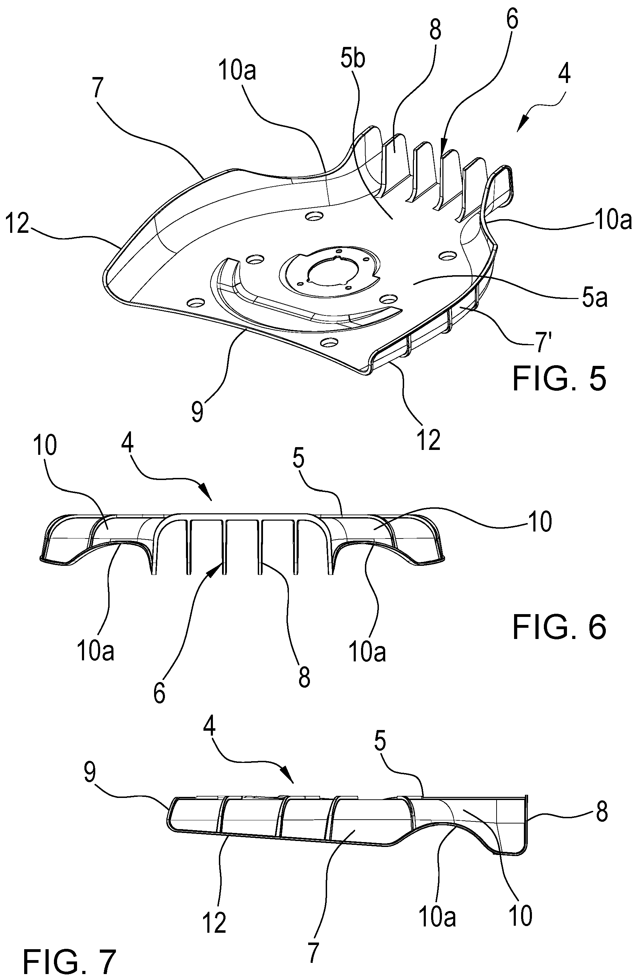

As illustrated in Figures 4 to 7, the blade guard 4 comprises a top cover 5 that delimits superiorly a cutting area 11 within which the cutting tools 3 operate. In one embodiment, the top cover 5 has a shape that converges towards the front of the lawnmower apparatus and comprises a substantially flat central area 5a, arranged vertically in correspondence with the cutting tools 3, as well as a peripheral area 5b that extends forwardly from the central area 5a. The peripheral area 5b extends in the direction of the front of the robot, towards a front grille 6, forming a tapered portion of the blade guard 4.

More precisely, the peripheral area 5b extends as a continuation of the central area 5a, lying on the same surface of the top cover 5 on which the central area 5a lies. In other words, the peripheral area 5b and the central area 5a do not lie on mutually transverse surfaces, but extend along the same surface of the top cover 5. In one example, the peripheral area 5b is coplanar with the central area 5a. The blade guard 4 has a front grille 6 positioned forwardly with respect to the top cover 5 and arranged transversely to the same top cover, having a plurality of protrusions 8 that define a toothed profile. This configuration of the front grille 6 allows to protect access to the cutting tool 3 by a user, while at the same time allowing grass to enter towards the cutting area.

On opposite sides of the top cover 5, the blade guard 4 comprises two lateral flanks 7 and 7', mutually opposed and arranged transversely to the top cover itself, contributing to laterally delimiting the cutting area 11 where the cutting tools 3 operate. Each flank extends over a curved lateral surface and comprises a front section 10, which connects to the respective end of the front grille 6. The front sections 10 have a lower edge 10a with an arcuate profile and a downward-facing concavity, i.e. towards a support plane 15 of the robot defined by the point of contact between the wheels 2 and the ground (see Figure 3). In other words, proceeding from the central area 5a of the top cover 5 towards the front grille 6, each lower edge 10a progressively approaches the top cover 5, following a curvilinear trajectory. In particular, each lower edge 10a of a respective front section 10 is located in proximity to the front grille 6, at the peripheral area 5b of the top cover 5. In this way, each lower edge 10a of the respective front section 10 laterally flanks the peripheral area 5b, contributing to perimetrically delimiting the tapered portion of the blade guard 4 in proximity to the front grille 6.

In proximity to the junction between each flank 7, 7' and the top cover 5, there is a connection portion 14, towards which the lower edge 10a of the front section 10 progressively approaches. Each edge 10a indeed has an arcuate shape, such that, proceeding towards the front grille 6, the distance between the edge itself and the connection portion 14 decreases until reaching a minimum in an intermediate zone of the front section. Starting from this intermediate zone, the edge 10a continues along a descending path, moving away from the connection portion 14 again, until it joins a lower end of a protrusion 8 of the front grille 6. This arcuate shape of the lower edge 10a, which includes an ascending portion followed by a descending one, allows a more natural passage of the grass blades, avoiding unwanted compression or bending, and thereby contributing to improving the effectiveness and uniformity of the cut.

Each front section 10 of a respective flank 7, 7' has a curved outer surface, the concavity of which is oriented outwardly from the robot, i.e. in the direction opposite to the cutting area 11. Referring, for example, to Figure 1, each front section 10 may also be positioned rearwardly with respect to a respective front wheel 2a, being aligned therewith along a direction parallel to the longitudinal development direction A of the robot, thereby ensuring compactness and non-interference with the movement means 2.

In continuity with each front section 10, each flank 7, 7' continues rearwardly with a respective rear section 12, which instead has a curved inner surface with a concavity oriented towards the cutting area 11. Each rear section 12 extends from the front section 10, running along the side of the blade guard 4 in the direction opposite to the front grille 6. Proceeding towards the rear of the robot, each rear section 12 extends until it reaches a rear opening 9 formed in the blade guard, which is configured to allow the expulsion of cut grass blades from the cutting area.

From a geometrical standpoint, and with reference to Figure 3, each flank 7, 7' may have a minimum vertical height H1, measured orthogonally with respect to the support plane 15, which is lower than a maximum height H2 of the lower edge 10a also measured orthogonally with respect to the same support plane. In one example, the minimum vertical height H1 may be greater than 8 cm, with the ratio between the maximum vertical height H2 and the minimum vertical height H1 being between 1 and 2.

From a structural standpoint, the front grille 6 may have a width extension smaller than the maximum distance between the flanks 7, 7', with a ratio preferably between 0.2 and 0.45. It should be noted that the width extension of the front grille 6, as well as the maximum distance between the flanks 7, 7', is measured on a horizontal plane, for example parallel to the support plane 15, along a direction transverse to the longitudinal development direction A of the robot.

## Claims

1. Robot lawnmower for land maintenance comprising:
- a plurality of wheels (2) to allow movement of the robot lawnmower on said lands,
- one or more cutting tools (3) for performing maintenance operations on said lands,
- a blade guard (4) located above said one or more cutting tools (3) and comprising:
∘ a top cover (5) delimiting superiorly a cutting area (11) of said one or more cutting tools (3),
∘ a front grille (6) positioned forwardly with respect to the top cover (5),
∘ two flanks (7, 7') opposite to each other and emerging laterally from the top cover (5), each of said flanks extending transversely to the same top cover (5),
wherein each flank (7, 7') comprises a respective front section (10) having a lower edge (10a) which, proceeding towards the front grille (6), progressively approaches the top cover (5).

2. Robot lawnmower according to the preceding claim, wherein said lower edge (10a) has an arcuate profile with concavity facing downwards, to allow the passage of grass blades without compression during the forward movement of the robot lawnmower.

3. Robot lawnmower according to any one of the preceding claims, wherein each lower edge (10a) of the respective front section (10) follows a curvilinear trajectory that, proceeding towards the front grille (6), progressively approaches a connection portion (14) joining each flank (7, 7') to the top cover (5),
wherein each lower edge (10a) has a minimum distance from said connection portion (14) at an intermediate zone of the front section.

4. Robot lawnmower according to any one of the preceding claims, wherein the top cover (5) comprises:
- a central area (5a) vertically aligned with the cutting tool (3),
- a peripheral area (5b) emerging forwardly from the central area (5a) in the direction of the front grille (6) to define a tapered portion of the blade guard (4),
wherein each front section (10) belonging to a respective flank (7, 7') is in proximity to opposite ends of the front grille (6) flanking the peripheral area (5b).

5. Robot lawnmower according to the preceding claim, wherein the peripheral area (5b) extends as a continuation of the central area (5a), lying on a same surface of the top cover (5) on which the central area (5a) lies,
optionally wherein the peripheral area (5b) is coplanar with the central area (5a).

6. Robot lawnmower according to any one of the two preceding claims, wherein each lower edge (10a) of a respective front section (10) is at the peripheral area (5b) of the top cover (5).

7. Robot lawnmower according to any one of the preceding claims, wherein each front section (10) of the respective flank (7, 7') has a curved outer surface with a concavity oriented in an outward direction with respect to the cutting area (11) where said one or more cutting tools (3) operate.

8. Robot lawnmower according to any one of the preceding claims, wherein each flank (7, 7') comprises a respective rear section (12) having a curved inner surface having concavity facing the cutting area (11) where said one or more working tools (3) operate,
wherein each rear section (12) adjoins a front section (10) of the same flank (7, 7').

9. Robot lawnmower according to any one of the preceding claims, wherein the blade guard (4) comprises a rear opening (9) located on the opposite side of the front grille (6) with respect to the top cover (5), wherein each rear section (12), opposite an end adjoining a front section (10), terminates at the rear opening (9), defining a lateral profile of said rear opening.

10. Robot lawnmower according to any one of the preceding claims, wherein each flank (7, 7') is located at a minimum vertical height (H1) with respect to a support plane (15) defined as the plane on which the wheels (2) of said plurality rest, which is lower than a maximum vertical height (H2) between the lower edge (10a) and the same support plane (15).

11. Robot lawnmower according to the preceding claim, wherein a ratio between the maximum vertical height (H2) of the lower edge (10a) and the minimum vertical height (H1) of each flank (7, 7') is between 1 and 2,
optionally wherein the minimum vertical height (H1) of each flank is greater than 8 cm, optionally greater than 10 cm.

12. Robot lawnmower according to any one of the preceding claims, comprising a frame (13) to which the blade guard (4) is fixed, said blade guard (4) being arranged between the frame (13) and said one or more cutting tools (3).

13. Robot lawnmower according to any one of the preceding claims, wherein the plurality of wheels (2) comprises two front wheels (2a) arranged forwardly with respect to two rear wheels (2b), relative to a longitudinal development direction (A) of the robot,
wherein each front section (10) of a respective flank (7, 7') is positioned rearwardly with respect to a respective one of said front wheels (2a),
and wherein each front section (10) is aligned with a respective one of said front wheels (2a) along a direction parallel to the longitudinal development direction (A).
